# FASCICULE DE BREVET EUROPEEN

(11) **EP 4 150 685 B1**
(45) Date de publication et mention de la délivrance du brevet: **17.07.2024**
(21) Numéro de dépôt: 21724709.7
(22) Date de dépôt: 14.05.2021
(51) Int. Cl.: H01M 8/0202, H01M 8/0213, H01M 8/0226, H01M 8/0258, H01M 8/0276, H01M 8/0284, H01M 8/0286, H01M 8/0297, H01M 8/04537, H01M 8/10, H01M 8/2432

(54) **PLAQUE SÉPARATRICE BIPOLAIRE POUR PILE À COMBUSTIBLE, PILE À COMBUSTIBLE ET PROCÉDÉ DE FABRICATION ASSOCIÉS**
BIPOLARE SEPARATORPLATTE FÜR EINE BRENNSTOFFZELLE, ZUGEHÖRIGE BRENNSTOFFZELLE UND HERSTELLUNGSVERFAHREN
BIPOLAR SEPARATOR PLATE FOR A FUEL CELL, ASSOCIATED FUEL CELL AND MANUFACTURING METHOD

(30) Priorité: 15.05.2020 FR 2004841
(43) Date de publication de la demande: 22.03.2023
(73) Titulaire: Alstom Hydrogène SAS, 13547 Aix en Provence Cedex 4 (FR)
(72) Inventeur: GUENOT, Benoit, 13100 Aix en Provence (FR); RAKOTONDRAINIBE, André, 13090 Aix en Provence (FR); HAMMADI, Yacine, 13510 Eguilles (FR); GENTILS, Bruno, 83170 Tourves (FR)
(74) Mandataire: Lavoix
(86) Numéro de dépôt international: PCT/EP2021/062820
(87) Numéro de publication internationale: WO 2021/229049

(56) Documents cités:
- FR-A1- 2 887 690
- FR-A1- 2 932 612
- JP-A- 2008 027 805
- US-A1- 2005 191 537
- ANONYMOUS: "Fuel cell voltage connection", RESEARCH DISCLOSURE, KENNETH MASON PUBLICATIONS, HAMPSHIRE, UK, GB, vol. 482, no. 129, June 2004 (2004-06-01), XP007133975, ISSN: 0374-4353

## Description

La présente invention concerne les plaques séparatrices bipolaires à canaux pour pile à combustible, munies de canaux pour la distribution de fluides réactifs dans la pile à combustible.

L'invention concerne également une pile à combustible comprenant une telle plaque séparatrice bipolaire.

L'invention concerne également un procédé de fabrication d'une telle plaque séparatrice bipolaire.

Une pile à combustible à membrane échangeuse d'ions comprend au moins une cellule électrochimique. Chaque cellule électrochimique est formée par un assemblage membrane-électrodes (aussi désigné par l'acronyme « AME » ou l'acronyme « MEA » pour « Membrane Electrode Assembly » selon la terminologie anglaise) intercalé entre deux plaques séparatrices.

Chaque assemblage membrane-électrodes est stratifié et comprend une membrane polymère séparatrice échangeuse d'ions intercalée entre deux électrodes. Chaque électrode comprend une couche active adjacente à la membrane et une couche de diffusion de gaz. Chaque assemblage membrane-électrodes comprend un côté anode où l'électrode forme une anode et un côté cathode où l'électrode forme une cathode.

Chaque plaque séparatrice comprend, sur sa face contre laquelle est plaqué l'assemblage membrane-électrodes, des canaux définissant entre la plaque séparatrice et l'assemblage membrane-électrodes des conduits d'écoulement d'un fluide réactif, en contact avec l'assemblage membrane-électrodes.

Les fluides réactifs comprennent un fluide combustible contenant un combustible et un fluide comburant contenant un comburant.

Les fluides réactifs sont généralement des gaz réactifs. Dans ce cas, les canaux situés sur une face d'une plaque séparatrice sont généralement nommés champ d'écoulement de gaz (ou « Gas Flow Field » selon la terminologie anglaise).L'électrode formant anode et l'électrode formant cathode sont reliées électriquement via un circuit électrique, incluant par exemple une charge électrique alimentée par la pile à combustible.

Lors du fonctionnement de la pile à combustible, un fluide combustible circule dans les canaux de la plaque séparatrice située côté anode et un fluide comburant circule dans les canaux de la plaque séparatrice située côté cathode.

Lors du processus électrochimique de production d'énergie électrique par la pile à combustible, dans chaque cellule électrochimique, le flux de matière combustible côté anode est converti en flux d'électrons et d'ions. Les électrons sont produits dans la couche active anodique de l'électrode formant anode et sont ensuite transportés par conduction électronique dans la couche de diffusion de l'électrode formant anode et la plaque séparatrice à l'anode de la pile à combustible. Les ions sont transportés par conduction ionique dans la membrane et se combinent avec le comburant et avec des électrons circulant de l'anode vers la cathode via le circuit électrique, en formant au moins un produit résultant.

La pile à combustible est par exemple du type PEMFC (« Proton Exchange Membrane Fuel Cell »). La membrane échangeuse d'ions est alors une membrane échangeuse et conductrice de protons. En fonctionnement, les canaux de la plaque séparatrice côté anode sont alimentés en hydrogène et les canaux de la plaque séparatrice côté cathode sont alimentés en air ou en oxygène. L'hydrogène produit des protons qui sont transportés par la membrane et des électrons qui sont transportés de l'anode vers la cathode. Les protons se combinent côté cathode avec des électrons fournis par l'anode vers la cathode et l'oxygène pour produire de l'eau.

La pile à combustible est par exemple formée d'un empilement alterné de plaques séparatrices et d'assemblages membrane-électrodes. Chaque ensemble formé d'un assemblage membrane-électrodes intercalé entre deux cellules électrochimiques forme une cellule électrochimique.

Une telle pile à combustible comprend des plaques séparatrices dites « bipolaires », chaque plaque séparatrice bipolaire étant située entre deux assemblages membrane-électrodes.

Chaque plaque séparatrice bipolaire possède une face en contact avec une électrode formant anode d'un assemblage membrane-électrode et une face en contact avec une électrode formant cathode d'un autre assemblage membrane-électrode, ces deux faces étant munies de canaux pour la circulation de fluides réactifs.

Chaque plaque séparatrice bipolaire est de préférence conductrice électriquement de manière à relier électriquement l'électrode formant anode et l'électrode formant cathode des assemblages membrane-électrodes entre lesquels elle est intercalée. Ainsi, les cellules électrochimiques de l'empilement sont reliées électriquement en série.

Chaque plaque séparatrice bipolaire est formée par exemple d'un assemblage de deux plaques élémentaires superposées. Les plaques élémentaires définissent avantageusement entre elles des canaux pour la circulation d'un fluide de refroidissement.

FR 2 887 690 décrit par exemple une plaque bipolaire pour pile à combustible.

Afin d'assurer une étanchéité entre les plaques élémentaires, il est connu d'utiliser des joints d'étanchéité qui nécessitent d'imposer un effort mécanique important lors de la fabrication de chaque plaque séparatrice bipolaire et nécessite une étape supplémentaire de positionnement du joint lors de la fabrication.

Il est également connu d'utiliser une colle époxy entre les plaques élémentaires. Toutefois, ce collage impose une mise en oeuvre difficile et nécessite de parfaitement maitriser le contact entre les deux plaques élémentaires au risque d'introduire des contraintes lors du serrage de l'empilement formant la pile à combustible.

Enfin, il est aussi possible de déposer un cordon de silicone à l'aide d'un robot. Toutefois, cette dépose nécessite une étape de séchage et de polymérisation. Ces étapes sont couteuses en temps de main d'oeuvre et ne sont pas reproductibles parfaitement.

En outre, il est souhaitable de pouvoir mesurer la tension électrique unitaire de chaque cellule électrochimique de la pile à combustible, par exemple pour en contrôler le fonctionnement.

A cet effet, il est possible d'usiner un logement sur le côté d'une plaque séparatrice afin d'y introduire une pointe de test pour la mesure de la tension. Cette façon de procéder présente toutefois des problèmes de reproductibilité de fabrication.

Un des buts de l'invention est donc de proposer une plaque séparatrice bipolaire fabricable plus facilement et rapidement, de manière reproductible et fiable.

A cet effet, l'invention a pour objet une plaque séparatrice bipolaire selon la revendication 1.

Selon d'autres modes de réalisation, la plaque séparatrice bipolaire comprend une ou plusieurs des caractéristiques optionnelles correspondant aux revendications 2 à 6.

L'invention concerne également une pile à combustible selon la revendication 7.

L'invention concerne également un procédé de fabrication d'une plaque séparatrice bipolaire selon la revendication 8.

Selon d'autres modes de réalisation, le procédé de fabrication comprend une ou plusieurs des caractéristiques optionnelles correspondant aux revendications 9 et 10.

L'invention et ses avantages seront mieux compris à la lecture de la description qui va suivre, donnée uniquement à titre d'exemple, et faite en référence aux dessins annexés, sur lesquels :
- [Fig 1] la figure 1 est une vue schématique en coupe d'une pile à combustible,
- [Fig 2] la figure 2 est une vue de dessus d'une plaque élémentaire d'une plaque séparatrice bipolaire de la pile à combustible de la figure 1, et
- [Fig 3] la figure 3 est une vue de dessous de la plaque élémentaire de la figure 2.

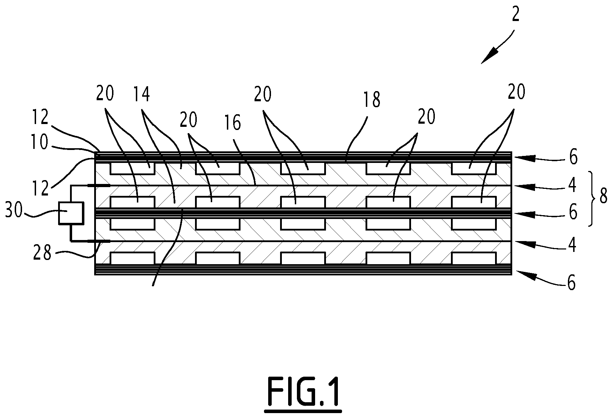

En référence à la figure 1, la pile à combustible 2 comprend un empilement de plaques séparatrices 4 et d'assemblages membrane-électrode 6. Un tel empilement est couramment désigné par le terme anglais « fuel cell stack ».

Chaque assemblage membrane-électrode 6 est disposé entre deux plaques séparatrices 4. Chaque ensemble formé d'une plaque séparatrice 4 et d'un assemblage membrane-électrode 6 définit une cellule électrochimique 8 élémentaire de la pile à combustible 2.

Chaque assemblage membrane électrode 6 est planaire et forme un ensemble stratifié comprenant une membrane 10 échangeuse d'ions et deux électrodes 12 disposées de part et d'autre de la membrane 10 et en contact direct entre elles.

La membrane 10 est notamment une membrane échangeuse de protons, et la pile à combustible du type PEM (« Proton Exchange Membrane »).

Chaque électrode 12 est conductrice électriquement. Chaque électrode 12 comprend une couche active et une couche de diffusion de gaz. Une des électrodes 12 définit une anode et l'autre une cathode.

Les plaques séparatrices 4 assurent la fonction de conduction électrique. Les plaques séparatrices 4 sont électriquement conductrices et en contact électrique avec les électrodes 12.

Les plaques séparatrices 4 assurent la fonction de distribution de gaz réactifs de part et d'autre de l'assemblage membrane-électrode 6 et d'évacuation des produits résultant.

Les plaques séparatrices 4 illustrées sur la figure 1 sont « bipolaires » : chaque plaque séparatrice 4 est disposée entre deux assemblages membrane-électrode 6.

Une plaque séparatrice est dite « monopolaire » lorsqu'elle possède une seule face en contact avec un assemblage membrane-électrode. De telles plaques séparatrices monopolaires (non visibles) se retrouvent aux extrémités de l'empilement de la pile à combustible 2.

Chaque plaque séparatrice 4 bipolaire est formée de deux plaques élémentaires 14 superposées l'une sur l'autre.

Chaque plaque élémentaire 14 est avantageusement réalisée dans un matériau composite comprenant une matrice renforcée avec une charge, en particulier une charge en carbone ou en graphite, par exemple une charge formée des fibres de carbone ou de poudre de graphite.

Chaque plaque élémentaire 14 comprend une face de fixation 16 tournée vers l'autre plaque élémentaire 14 et une face d'écoulement 18 tournée à l'opposé de l'autre plaque élémentaire 14.

Chaque plaque séparatrice 4 est en contact par l'une de ses faces d'écoulement 18 avec l'électrode 12 formant anode d'un ensemble membrane-électrode 6 et en contact par l'autre de ses faces d'écoulement 18 avec l'électrode 12 formant cathode de l'autre ensemble membrane-électrode 6.

Chaque face d'écoulement 18 définit au moins un canal 20. Chaque canal 20 définit avec un assemblage membrane-électrode 6 adjacent un conduit d'alimentation pour l'écoulement de gaz réactifs en contact avec l'assemblage membrane-électrode 6.

Les canaux 20 des faces d'écoulement 18 de chaque plaque séparatrice 4 sont alimentés séparément en gaz réactifs différents. Les canaux 20 de la face d'écoulement 18 en contact avec une électrode 12 formant l'anode sont alimentés en combustible, par exemple de l'hydrogène, et les canaux 20 de l'autre face d'écoulement 18 en contact avec une électrode 12 formant la cathode sont alimentés en comburant, par exemple de l'oxygène ou de l'air.

Les canaux 20 des faces d'écoulement 18 des plaques séparatrices 4 en contact avec les électrodes 12 formant l'anode définissent un compartiment anodique et sont reliés fluidiquement entre eux. Les canaux 20 des faces d'écoulement 18 des plaques séparatrices 4 en contact avec les électrodes 12 formant la cathode définissent un compartiment cathodique et sont reliés fluidiquement entre eux.

Chaque plaque séparatrice 4 comprend une entrée d'alimentation de chaque canal 20 en gaz réactif, et une sortie d'évacuation des gaz réactifs non consommés et des produits résultant du fonctionnement de la pile à combustible.

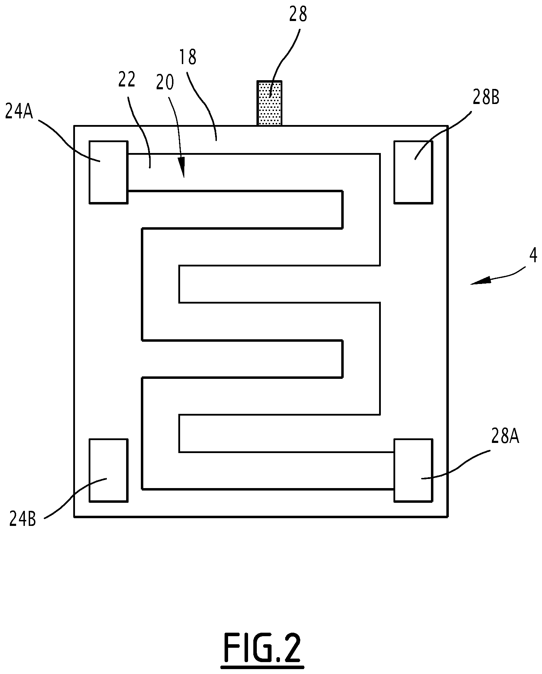

En particulier, comme illustré sur la figure 2, la plaque séparatrice 4 comprend sur sa face d'écoulement 18 un canal 20 comprenant un tronçon d'entrée 22 s'alimentant en gaz réactif dans un orifice d'alimentation 24A (définissant l'entrée d'alimentation) et un tronçon de sortie 26 débouchant dans un orifice d'évacuation 28A (définissant la sortie d'évacuation).

Le canal 20 permet l'écoulement du gaz réactif le long de l'assemblage membrane-électrode du tronçon d'entrée 22 vers le tronçon de sortie 26.

Le canal 20 s'étend entre son tronçon d'entrée 22 et son tronçon de sortie 26 suivant un trajet sinueux, ici en serpentin.

L'orifice d'alimentation 24A traverse la plaque séparatrice 4. Lorsque plusieurs plaques séparatrices 4 sont empilées, les orifices d'alimentation 24A sont alignés de façon à définir un collecteur d'alimentation s'étendant au travers de l'empilement de la pile à combustible 2.

L'orifice d'évacuation 28A traverse la plaque séparatrice 4. Lorsque plusieurs plaques séparatrices 4 sont empilées, les orifices d'évacuation 28A sont alignés de façon à définir un collecteur d'évacuation.

La plaque séparatrice 4 comprend un autre orifice d'alimentation 24B et un autre orifice d'évacuation 28B qui ne sont pas reliés fluidiquement au canal 20 de la face d'écoulement 18 visible mais à un canal de la face opposée non visible sur la figure 2.

En fonctionnement, un des orifices d'alimentation 24A, 24B est alimenté en combustible, et l'autre en comburant.

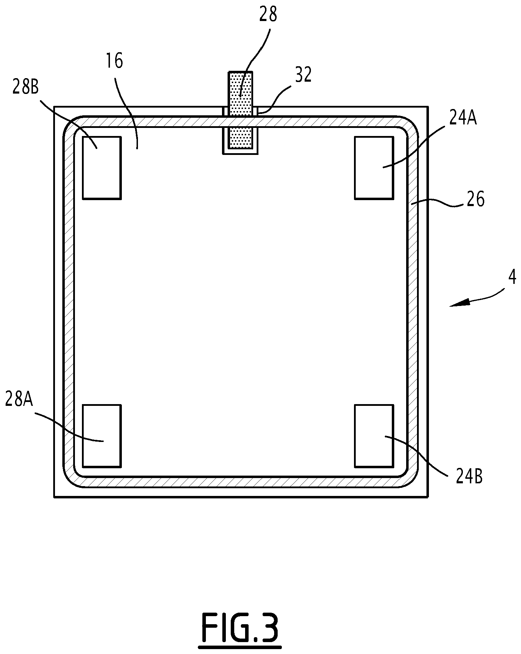

Comme visible sur les figures, la plaque séparatrice 4 selon l'invention comprend en outre un adhésif 26, visible sur la figure 3, et un insert métallique 28.

L'adhésif 26 est disposé entre les deux plaques élémentaires 14 pour assembler les deux plaques élémentaires 14 ensemble et former la plaque séparatrice 4 bipolaire.

Comme visible sur la figure 3, l'adhésif 26 est en particulier disposé sur la face de fixation 16 de chaque plaque élémentaire 14, le long du bord périphérique de la face de fixation 16.

L'adhésif 26 est notamment disposé dans un logement formé dans la face de fixation 16, par exemple sous la forme d'un canal ménagé dans la face de fixation 16, en particulier le long du bord périphérique de la face de fixation 16.

De préférence, comme représenté sur la figure 3, l'adhésif 26 s'étend suivant une ligne fermée. Ceci permet d'assurer l'étanchéité entre les deux plaques élémentaires 14 dans la zone située à l'intérieur de la ligne fermée.

Dans un mode de réalisation avantageux non représenté, l'adhésif 26 s'étend en autour de chaque orifice 24A, 24B, 28A, 28B suivant un contour fermé. Ceci permet d'assurer l'étanchéité autour de chaque orifice 24A, 24B, 28A, 28B.

L'adhésif 26 est avantageusement une bande adhésive présentant une épaisseur inférieure à 0,05 mm, en particulier inférieure à 0,04 mm.

Dans un exemple de réalisation, l'adhésif 26 comprend ou est constitué d'une mousse acrylique.

L'insert métallique 28 est disposé entre les deux plaques élémentaires 14 et fait saillie d'un bord de la plaque séparatrice 4.

Plus particulièrement, l'insert métallique 28 comprend une portion de fixation disposée entre les deux plaques élémentaires 14 et une portion saillante faisant saillie d'un bord de la plaque séparatrice 4.

Avantageusement, la plaque séparatrice 4 est munie d'un évidement délimité entre les deux plaques élémentaires 14, l'insert métallique 28, ou plus spécifiquement sa portion de fixation, étant reçu dans l'évidement, entre les deux plaques élémentaires 14.

L'évidement est par exemple formé en ménageant une encoche 32 dans la face de fixation 16 d'une seule des deux plaques élémentaires 14, l'encoche 32 débouchant sur un bord de la face de fixation 16, ou en prévoyant une telle encoche 32 respectivement sur la face de fixation 16 de chacune des deux plaques élémentaires 14, les deux encoches 32 étant en regard l'un de l'autre.

L'insert métallique 28 disposé entre les plaques élémentaires 14 est en contact électrique avec au moins une de ces plaques élémentaires 14, en particulier avec chacune des plaques élémentaires 14. Il se situe au même potentiel électrique que les plaques élémentaires, i.e. que la plaque séparatrice 4.

L'insert métallique 28 est relié à une unité de mesure de tension 30, comme représenté sur la figure 1.

A cet effet, comme visible sur les figures, l'insert métallique 28, plus particulièrement sa portion saillante, fait saille d'un bord de la plaque séparatrice 4, et la mesure de tension 30 est reliée à cette portion saillante. Celle-ci forme une borne de connexion de la plaque séparatrice 4, permettant la connexion de l'unité de mesure de tension 30.

L'unité de mesure de tension 30 est configurée pour mesurer la tension électrique entre deux inserts métallique 28 prévus sur deux plaques séparatrices 4 adjacentes, situées de part et d'autre d'un même ensemble membrane-électrode 6, et ainsi mesurer la tension produite par cet ensemble membrane-électrode 6. L'unité de mesure de tension 30 est par exemple un voltmètre.

L'insert métallique 28 comprend avantageusement du cuivre, notamment du cuivre brut ou doré.

L'insert métallique 28 présente en particulier la forme d'une languette. La portion de fixation et la portion saillante constituent deux tronçons distincts de l'insert métallique 28 en forme de languette.

L'insert métallique 28 en forme de languette présente par exemple une épaisseur inférieure inférieure à 2,0 mm, avantageusement inférieure à 1,0 mm. Ceci facilite l'insertion de l'insert métallique 28 entre les deux plaques élémentaires 14.

L'insert métallique 28 s'étend notamment sur une longueur comprise entre 1,0 cm et 4,0 cm, avantageusement sur une longueur comprise entre 1,0 cm et 2,0 cm.

L'insert métallique 28 fait saillie hors de la plaque séparatrice 4 sur une distance comprise entre 1,0 cm et 2,0 cm. Ceci correspond à la longueur de la portion saillante de l'insert métallique 28.

Comme visible sur la figure 3, une partie de l'adhésif 26 est en contact avec l'insert métallique 28.

En particulier, l'insert métallique 28 est reçu dans l'encoche 32 et l'adhésif 26 est posé sur la face de fixation 16 en recouvrant la portion de fixation de l'insert métallique 28, qui est reçu dans l'encoche 32. L'adhésif 26 ainsi disposé maintient ainsi l'insert métallique 28 dans l'évidement.

Dans le mode de réalisation visible sur la figure 3, l'insert métallique 28 s'étend de part et d'autre de l'adhésif 26, vers l'intérieur et vers l'extérieur de la plaque séparatrice 4.

En variante, l'insert métallique 28 s'étend uniquement d'un côté de l'adhésif 26, vers l'extérieur de la plaque séparatrice 4.

Dans un mode de réalisation avantageux, de manière connue, chaque plaque séparatrice 4 de la pile à combustible 2 est munie de conduits de refroidissement internes ménagés dans la plaque séparatrice 4 pour la circulation d'un fluide de refroidissement. Les conduits de refroidissement sont définis par exemple par des canaux réalisés dans la face de fixation 16 d'une ou de chacun des plaques élémentaires de la plaque séparatrice 4.

Les conduits de refroidissement sont alimentés en fluide de refroidissement par l'intermédiaire d'un orifice d'entrée de refroidissement et débouchent dans un orifice de sortie de refroidissement traversant la plaque séparatrice 4.

Lorsque les plaques séparatrices 4 sont empilées, les orifices d'entrée de refroidissement et les orifices de sortie de refroidissement sont alignés et définissent respectivement un collecteur d'entrée de refroidissement et un collecteur de sortie de refroidissement.

L'adhésif 26 s'étend alors avantageusement autour des conduits de refroidissement suivant et de l'orifice d'entrée et de l'orifice de sortie suivant un contour fermé. Ceci permet s'assurer l'étanchéité des conduits de refroidissement, en particulier l'étanchéité entre les conduits de refroidissement et les orifices prévus à travers les plaques élémentaires 14 pour les gaz réactifs.

Un procédé de fabrication d'une plaque séparatrice 4 bipolaire selon l'invention va maintenant être décrit.

Initialement, une première plaque élémentaire 14 est fournie, étant munie d'une encoche 32 de réception d'un insert métallique 28.

Un insert métallique 28 est disposé dans l'encoche 32 ménagée sur la face de fixation 16 de la première plaque élémentaire 14 de telle sorte que l'insert métallique 28 fasse saille d'un bord de la première plaque élémentaire 14.

Puis, un adhésif 26 est disposé sur la face de fixation 16 de la première plaque élémentaire 14 de telle sorte qu'une partie de l'adhésif 26 est en contact avec l'insert métallique 28, et en particulier recouvre partiellement l'insert métallique 28. En particulier, l'adhésif 26 est disposé suivant une ligne qui passe par l'encoche 32 pour recouvrir l'insert métallique 28 logé dans l'encoche 32.

Ainsi, l'adhésif 26 maintient l'insert métallique 28 en place dans l'encoche 32.

En particulier, l'adhésif 26 se présente sous forme d'une bande adhésive disposée suivant une ligne s'étendant le long du bord périphérique de la face de fixation 16, comme visible sur la figure 3.

La bande adhésive comprend par exemple deux faces, au moins une des deux faces étant recouverte par une bande de protection empêchant la bande adhésive de coller, et pouvant être retirée pour le collage de la bande adhésive.

La bande adhésive est par exemple disposée et collée par laminage à froid sur la face de fixation 16 de la première plaque élémentaire 14, en appliquant une face découverte de la bande adhésive sur la face de fixation 16.

La bande de protection recouvrant l'autre face de la bande adhésive est ensuite enlevée de la bande adhésive.

Puis, une deuxième plaque élémentaire 14 est fournie.

La deuxième plaque élémentaire 14 est superposée à la première plaque élémentaire 14 de telle sorte que les deux faces de fixation 16 soient positionnées l'une vers l'autre. La face de fixation 16 de la deuxième plaque élémentaire 14 viens alors en contact avec la bande adhésive.

Les deux plaques élémentaires 14 sont assemblées par l'adhésif 26 afin de former une plaque séparatrice 4 bipolaire.

Puis, avantageusement, la plaque séparatrice 4 bipolaire est mise sous presse afin d'assurer une bonne adhésion entre les deux plaques élémentaires 14.

On conçoit alors que la présente invention présente un certain nombre d'avantages.

En effet, le procédé de fabrication selon l'invention est aisé à mettre en oeuvre.

De plus, cette fabrication est rapide et ne nécessite que peu de main d'oeuvre.

Ainsi, l'invention permet un gain de temps important dans la phase de montage de la pile à combustible 2.

En outre, le procédé selon l'invention est facilement automatisable et présente une bonne fiabilité. De plus, la plaque séparatrice bipolaire 4 selon l'invention permet un interfaçage plus aisé avec un dispositif de mesure de tension industriel.

De ce fait, l'invention convient bien à une utilisation industrielle, reproductible et fiable.

## Revendications

1. Plaque séparatrice bipolaire (4) à canaux pour pile à combustible (2), la plaque séparatrice bipolaire (4) étant formée de deux plaques élémentaires (14) superposées l'une sur l'autre, chaque plaque élémentaire (14) comprenant une face de fixation (16) tournée vers l'autre plaque élémentaire (14) et une face d'écoulement (18) tournée à l'opposé de l'autre plaque élémentaire (14) et définissant au moins un canal (20) pour l'écoulement d'un gaz réactif ;
**caractérisée en ce que** la plaque séparatrice bipolaire (4) comprend en outre :
- un adhésif (26) disposé entre les deux plaques élémentaires (14) pour assembler les deux plaques élémentaires (14) ; et
- un insert métallique (28) interposé entre les deux plaques élémentaires (14) et faisant saille d'un bord de la plaque séparatrice bipolaire (4), une partie de l'adhésif (26) étant en contact avec l'insert métallique (28).

2. Plaque séparatrice bipolaire (4) selon la revendication 1, dans lequel l'insert métallique (28) est propre à être relié à une unité de mesure de tension (30).

3. Plaque séparatrice bipolaire (4) selon la revendication 1 ou 2, dans lequel l'adhésif (26) est une bande adhésive présentant une épaisseur inférieure à 0,05 mm, en particulier inférieure à 0,04 mm.

4. Plaque séparatrice bipolaire (4) selon l'une quelconque des revendications précédentes, dans lequel l'adhésif (26) comprend ou est constitué d'une mousse acrylique.

5. Plaque séparatrice bipolaire (4) selon l'une quelconque des revendications précédentes, dans lequel l'insert métallique (28) est une languette présentant une épaisseur inférieure à 2 mm, avantageusement inférieure à 1 mm.

6. Plaque séparatrice bipolaire (4) selon l'une quelconque des revendications précédentes, dans lequel chaque plaque élémentaire (14) est réalisée dans un matériau composite comprenant une matrice renforcée avec une charge, en particulier une charge en carbone ou en graphite, par exemple une charge formée des fibres de carbone ou en graphite.

7. Pile à combustible (2) comprenant :
- au moins une plaque séparatrice bipolaire (4) selon l'une quelconque des revendications précédentes ;
- au moins deux assemblages électrodes-membrane (6), chaque assemblage électrodes-membrane (6) étant appliqué contre la face d'écoulement (18) de l'une des plaques élémentaires (14) ; et
- une unité de mesure de tension (30) reliée à l'insert métallique (28).

8. Procédé de fabrication d'une plaque séparatrice bipolaire (4) à canaux pour pile à combustible (2) comprenant au moins les étapes suivantes :
- fourniture d'une première plaque élémentaire (14) comprenant deux faces opposées dont une face de fixation (16) et une face d'écoulement (18), la face d'écoulement (18) définissant au moins un canal (20) pour l'écoulement d'un gaz réactif,
- disposition d'un insert métallique (28) sur la face de fixation (16) de la première plaque élémentaire (14) de telle sorte que l'insert métallique (28) fasse saille d'un bord de la première plaque élémentaire(14),
- disposition d'un adhésif (26) sur la face de fixation de la première plaque élémentaire (14), une partie de l'adhésif (26) étant en contact avec l'insert métallique (28),
- fourniture d'une deuxième plaque élémentaire (14) comprenant deux faces opposées dont une face de fixation (16) et une face d'écoulement (18), la face d'écoulement (18) définissant au moins un canal (20) pour l'écoulement d'un gaz réactif, et
- superposition de la deuxième plaque élémentaire (14) avec la première plaque élémentaire (14) de telle sorte que les deux faces de fixation (16) soient positionnées l'une vers l'autre, les plaques élémentaires (14) étant assemblées par l'adhésif (26).

9. Procédé de fabrication selon la revendication 8, dans lequel l'adhésif (26) est une bande adhésive collée par laminage à froid sur la face de fixation (16) de la première plaque élémentaire (14).

10. Procédé de fabrication selon la revendication 8 ou 9, comprenant en outre une étape de mise sous presse de la plaque séparatrice bipolaire (4) après l'étape de superposition.

## Patentansprüche

1. Bipolare Separatorplatte (4) mit Kanälen für eine Brennstoffzelle (2), wobei die bipolare Separatorplatte (4) aus zwei übereinander angeordneten Elementarplatten (14) gebildet ist, wobei jede Elementarplatte (14) eine Befestigungsfläche (16) aufweist, die der anderen Elementarplatte (14) zugewandt ist und eine Strömungsfläche (18), die der anderen Elementarplatte (14) abgewandt ist und mindestens einen Kanal (20) für die Strömung eines reaktiven Gases definiert;
**dadurch gekennzeichnet, dass** die bipolare Separatorplatte (4) ferner umfasst:
- einen Klebstoff (26), der zwischen den beiden Elementarplatten (14) angeordnet ist, um die beiden Elementarplatten (14) zusammenzufügen; und
- einen Metalleinsatz (28), der zwischen den beiden Elementarplatten (14) angeordnet ist und von einem Rand der bipolaren Separatorplatte (4) vorsteht, wobei ein Teil des Klebstoffs (26) mit dem Metalleinsatz (28) in Kontakt ist.

2. Bipolare Separatorplatte (4) nach Anspruch 1, wobei der Metalleinsatz (28) geeignet ist, mit einer Spannungsmesseinheit (30) verbunden zu werden.

3. Bipolare Separatorplatte (4) nach Anspruch 1 oder 2, wobei der Klebstoff (26) ein Klebestreifen ist, der eine Dicke von weniger als 0,05 mm, insbesondere weniger als 0,04 mm, aufweist.

4. Bipolare Separatorplatte (4) nach einem der vorhergehenden Ansprüche, wobei der Klebstoff (26) einen Acrylschaum umfasst oder aus diesem besteht.

5. Bipolare Separatorplatte (4) nach einem der vorhergehenden Ansprüche, wobei der Metalleinsatz (28) eine Zunge mit einer Dicke von weniger als 2 mm, vorteilhafterweise weniger als 1 mm, ist.

6. Bipolare Separatorplatte (4) nach einem der vorhergehenden Ansprüche, wobei jede Elementarplatte (14) aus einem Verbundmaterial hergestellt ist, das eine Matrix umfasst, die mit einem Füllstoff, insbesondere einem Kohlenstoff- oder Graphitfüllstoff, verstärkt ist, z. B. einem Füllstoff, der aus Kohlenstoff- oder Graphitfasern gebildet ist.

7. Brennstoffzelle (2) umfassend:
- mindestens eine bipolare Separatorplatte (4) nach einem der vorherigen Ansprüche;
- mindestens zwei Elektroden-Membran-Baugruppen (6), wobei jede Elektroden-Membran-Baugruppe (6) gegen die Strömungsfläche (18) einer der Elementarplatten (14) gedrückt wird; und
- eine Spannungsmesseinheit (30), die mit dem Metalleinsatz (28) verbunden ist.

8. Verfahren zur Herstellung einer bipolaren Separatorplatte (4) mit Kanälen für eine Brennstoffzelle (2), das mindestens die folgenden Schritte umfasst:
- Bereitstellung einer ersten Elementarplatte (14), die zwei gegenüberliegende Seiten umfasst, eine Befestigungsfläche (16) und eine Strömungsfläche (18), wobei die Strömungsfläche (18) mindestens einen Kanal (20) für die Strömung eines reaktiven Gases definiert,
- Anbringen eines Metalleinsatzes (28) auf der Befestigungsfläche (16) der ersten Elementarplatte (14), so dass der Metalleinsatz (28) von einer Kante der ersten Elementarplatte (14) vorsteht,
- Anbringen eines Klebstoffs (26) auf der Befestigungsfläche der ersten Elementarplatte (14), wobei ein Teil des Klebstoffs (26) mit dem Metalleinsatz (28) in Kontakt ist,
- Bereitstellen einer zweiten Elementarplatte (14), die zwei gegenüberliegende Seiten umfasst, darunter eine Befestigungsfläche (16) und eine Strömungsfläche (18), wobei die Strömungsfläche (18) mindestens einen Kanal (20) für die Strömung eines reaktiven Gases definiert, und
- Übereinanderlegen der zweiten Elementarplatte (14) mit der ersten Elementarplatte (14), so dass die beiden Befestigungsflächen (16) zueinander positioniert sind, wobei die Elementarplatten (14) durch den Klebstoff (26) zusammengefügt werden.

9. Herstellungsverfahren nach Anspruch 8, wobei der Klebstoff (26) ein Klebestreifen ist, der durch Kaltlaminieren auf die Befestigungsfläche (16) der ersten Elementarplatte (14) geklebt wird.

10. Herstellungsverfahren nach Anspruch 8 oder 9, das außerdem einen Schritt umfasst, bei dem die bipolare Separatorplatte (4) nach dem Überlagerungsschritt unter Druck gesetzt wird.

## Claims

1. A bipolar separator plate (4) with channels for a fuel cell (2), the bipolar separator plate (4) being formed of two elementary plates (14) superimposed on one another, each elementary plate (14) comprising a fixing face (16) facing the other elementary plate (14) and a flow face (18) facing away from the other elementary plate (14) and defining at least one channel (20) for the flow of a reactive gas;
**characterized in that** the bipolar separator plate (4) further comprises:
- an adhesive (26) placed between the two elementary plates (14) to join the two elementary plates (14); and
- a metal insert (28) interposed between the two elementary plates (14) and protruding from an edge of the bipolar separator plate (4), a portion of the adhesive (26) being in contact with the metal insert (28).

2. The bipolar separator plate (4) according to claim 1, wherein the metal insert (28) is adapted to be connected to a voltage measurement unit (30).

3. The bipolar separator plate (4) according to claim 1 or 2, wherein the adhesive (26) is an adhesive tape having a thickness of less than 0.05 mm, in particular less than 0.04 mm.

4. The bipolar separator plate (4) according to any one of the preceding claims, wherein the adhesive (26) comprises or consists of an acrylic foam.

5. The bipolar separator plate (4) according to any one of the preceding claims, wherein the metal insert (28) is a tab having a thickness of less than 2 mm, advantageously less than 1 mm.

6. The bipolar separator plate (4) according to any one of the preceding claims, wherein each elementary plate (14) is made of a composite material comprising a matrix reinforced with a filler, in particular a carbon or graphite filler, for example a filler formed of carbon or graphite fibers.

7. A fuel cell (2) comprising:
- at least one bipolar separator plate (4) according to any of the preceding claims;
- at least two electrode-membrane assemblies (6), each electrode-membrane assembly (6) being applied against the flow face (18) of one of the elementary plates (14); and
- a voltage measurement unit (30) connected to the metal insert (28).

8. A method for manufacturing a bipolar channel separator plate (4) for a fuel cell (2) comprising at least the following steps:
- providing a first elementary plate (14) comprising two opposite faces including an attachment face (16) and a flow face (18), the flow face (18) defining at least one channel (20) for the flow of a reactive gas,
- providing a metal insert (28) on the attachment face (16) of the first elementary plate (14) such that the metal insert (28) projects from an edge of the first elementary plate (14),
- providing an adhesive (26) on the attachment face of the first elementary plate (14), a portion of the adhesive (26) contacting the metal insert (28),
- providing a second elementary plate (14) comprising two opposing faces including an attachment face (16) and a flow face (18), the flow face (18) defining at least one channel (20) for the flow of a reactive gas, and
- superimposing the second elementary plate (14) with the first elementary plate (14) such that the two attachment faces (16) are positioned toward each other, the elementary plates (14) being joined by the adhesive (26).

9. The manufacturing method according to claim 8, wherein the adhesive (26) is an adhesive tape, cold-laminated to the attachment face (16) of the first elementary plate (14).

10. The manufacturing method according to claim 8 or 9, further comprising a step of press-fitting the bipolar separator plate (4) after the overlaying step.
